# EUROPÄISCHE PATENTSCHRIFT

(11) **EP 0 787 376 B1**
(45) Veröffentlichungstag und Bekanntmachung des Hinweises auf die Patenterteilung: **10.06.1998**
(21) Anmeldenummer: 95935820.1
(22) Anmeldetag: 19.10.1995
(51) Int. Cl.: H02B 13/035

(54) **METALLGEKAPSELTE ELEKTRISCHE HOCHSPANNUNGSSCHALTANLAGE MIT EINEM LEISTUNGSSCHALTER**
METAL-CLADDED ELECTRICAL HIGH-VOLTAGE SWITCHING INSTALLATION WITH A POWER SWITCH
INSTALLATION ELECTRIQUE DE DISTRIBUTION HAUTE TENSION A SECTIONNEUR DE PUISSANCE, A BLINDAGE METALLIQUE

(30) Priorität: 21.10.1994 DE 4438776
(43) Veröffentlichungstag der Anmeldung: 06.08.1997
(73) Patentinhaber: SIEMENS AKTIENGESELLSCHAFT, 80333 München (DE)
(72) Erfinder: MEINHERZ, Manfred, D-13467 Berlin (DE); KELCH, Thomas, D-13465 Berlin (DE)
(86) Internationale Anmeldenummer: DE9501503
(87) Internationale Veröffentlichungsnummer: WO9613087

(56) Entgegenhaltungen:
- EP-A- 0 152 611
- DE-B- 2 003 076

## Beschreibung

Die Erfindung bezieht sich auf eine metallgekapselte elektrische Hochspannungsschaltanlage mit zwei Sammelschienen und einem Leistungsschalter, mit dessen erstem Ende die Anschlüsse zweier Trennschalter verbunden sind, von denen je einer im Einschaltzustand den Leistungsschalter mit je einem Sammelschienenleiter verbindet und mit einem Kapselungsgehäuse für den Leistungsschalter, in dem die Anschlüsse der Trennschalter getrennt voneinander angeordnet sind, wobei mit dem ersten Ende des Leistungsschalters ein Kontaktstück fest verbunden ist, welches zusammen mit dem Leistungsschalter dem Kapselungsgehäuse entnehmbar ist und mindestens zwei Kontakteinrichtungen zur elektrischen Verbindung des Leistungsschalters mit je einem der Trennschalter aufweist, wobei die Kontakteinrichtungen zusammen mit den Anschlüssen der Trennschalter innerhalb des Kapselungsgehauses Steckverbindungen bilden.

Eine derartige Hochspannungsschaltanlage ist aus der DE-OS 21 46 625 und der DE-A-20 03 076 bekannt. Dort ist im Trennungszustand der Trennschalter sowohl der jeweilige Sammelschienenleiter als auch der Leistungsschalter von den Trennschaltern isoliert. Das Schließen eines Trennschalters stellt in relativ aufwendiger Weise sowohl eine leitende Verbindung zum Leistungsschalter als auch zu dem jeweiligen Sammelschienenleiter her. Das Potential der Trennschalter ist im Trennzustand unbestimmt. Hierdurch können Überschläge auftreten.

Außerdem sind die Trennschalter, die einige bewegte Teile aufweisen, störungsanfällig und es kann nicht mit Sicherheit gewährleistet werden, daß auch stets beide Trennschalter mit dem Leistungsschalter verbunden sind.

Eine ähnliche Hochspannungsschaltanlage ist beispielsweise aus der europäischen Patentschrift 0 348 313 bekannt. Bei der bekannten Schaltanlage sind zwei Sammelschienen mit Trennschaltern versehen, deren Anschlüsse in den Gasraum eines Leistungsschalters hineinragen und dort mittels eines Verbindungsleiters miteinander verbunden sind. Der Leistungsschalter ist mit dem Verbindungsleiter verbunden.

Diese Ausführung ist nur mit hohem Aufwand montierbar bzw. demontierbar, da der Verbindungsleiter jeweils mit den Anschlüssen der Trennschalter verbunden oder von diesen wieder getrennt werden muß.

Aus der EP-A-0 152 611 ist eine Hochspannungsschaltanlage mit einem Leistungsschalter bekannt, der ebenfalls mit zwei Trennschaltern verbindbar ist.

Der dort beschriebene Leistungsschalter kann jedoch seinem Kapselungsgehäuse, das vom Kapselungsgehäuse der Trennschalter und der Sammelschienen getrennt ist, nicht ohne weiteres entnommen werden, ohne die Kapselung der Trennschalter zu öffnen. Zur Entfernung des Leistungsschalters muß ein Teil seines Kapselungsgehäuses mit entfernt werden.

Der vorliegenden Erfindung liegt die Aufgabe zugrunde, eine metallgekapselte Hochspannungsschaltanlage der eingangs genannten Art so auszubilden, daß ein möglichst geringer Montageaufwand bei der Montage und bei Wartungsarbeiten gewährleistet ist, wobei der konstruktive Aufbau sowohl der Trennschalter als auch der elektrischen Verbindungen vereinfacht werden soll.

Aus dieser Entgegenhaltung ist auch eine Steckverbindung zur Kontaktierung eines Trennschalters bekannt, die dort im Gasraum der Trennschalter lebt, was dazu führt, daß zur Auftrennung der Verbindung zwischen dem Leistungsschalter und einem Trennschalter das Kapselungsgehause des Leistungsschalters entfernt werden muß.

Die Aufgabe wird erfindungsgemäß dadurch gelöst, daß die Steckverbindungen trennschalterseitig unbewegliche Kontaktstücke aufweisen, in die bei der Montage durch axiales Einbringen des Leistungsschalters in das Kapselungsgehäuse entsprechende Gegenkontaktstücke in axialer Richtung einschiebbar sind.

Durch die erfindungsgemäße Konstruktion ist gewährleistet, daß beim Einbau des Leistungsschalters in das Kapselungsgehäuse das erste Ende des Schalters mit den Anschlüssen der Trennschalter dauerhaft verbunden wird, ohne daß weitere Montagearbeiten notwendig wären. Es ist kein besonderes Verbindungsstück zur Verbindung der Anschlüsse der beiden Trennschalter notwendig. Die elektrische Verbindung zwischen dem Leistungsschalter und den Trennschaltern wird vorteilhaft allein durch das Einschieben des Leistungsschalters in das Kapselungsgehäuse hergestellt. Es können auch keine Montagefehler vorkommen, derart daß der Leistungsschalter nur mit einem der Trennschalter verbunden wird. Außerdem wird der elektrische Widerstand zwischen den Trennschaltern und dem Leistungsschalter gering gehalten, da nur eine einzige lösbare Verbindung zwischen den Anschlüssen der Trennschalter und dem Leistungsschalter besteht. Das Potential der verschiedenen Teile der Trennschalter ist in jedem Schaltzustand determiniert.

Eine vorteilhafte Ausgestaltung der Erfindung sieht vor, daß das Kontaktstück eine weitere Kontakteinrichtung aufweist, mit der ein in dem Kapselungsgehause angeordneter Erdungsschalter in der Erdungsstellung zusammenwirkt.

In dem Kontaktstück ist somit noch eine weitere Funktion integriert, nämlich die Kontaktgabe für einen Erdungsschalter. Auch hierdurch wird der Montageaufwand für die Hochspannungsschaltanlage erheblich verringert.

Es kann außerdem vorteilhaft vorgesehen sein, daß das Kapselungsgehäuse wenigstens teilweise zylindrisch ausgebildet ist und daß ein erster Trennschalter in der Längsachse des Kapselungsgehäuses an dessen einem Ende angeordnet ist und daß ein zweiter Trennschalter an demselben Ende des Kapselungsgehäuses mantelseitig angeordnet ist.

In diesem Fall sind die beiden Sammelschienen, die an die Trennschalter angeschlossen sind, nahe nebeneinander angeordnet und dennoch bleibt genug Platz für die Trennschalter. Eine der Kontakteinrichtungen an dem Kontaktstück kann dann beispielsweise stirnseitig angebracht sein, während die anderen Kontakteinrichtungen seitlich an dem Kontaktstück angeordnet sind. Es kann vorgesehen sein, den Leistungsschalter direkt axial in das Kapselungsgehäuse einzuschieben, es kann aber auch vorteilhaft sein, den Leistungsschalter zunächst ein Stück weit axial in das Kapselungsgehäuse hinein zu verschieben und ihn danach in radialer Richtung zu verschieben, um ihn in die Endposition zu bringen. Entsprechend sollten die Kontakteinrichtungen ausgebildet sein, wenn es sich um Steckverbindungen handelt.

Im folgenden wird die Erfindung anhand eines Ausführungsbeispiels in einer Zeichnung gezeigt und anschließend beschrieben.

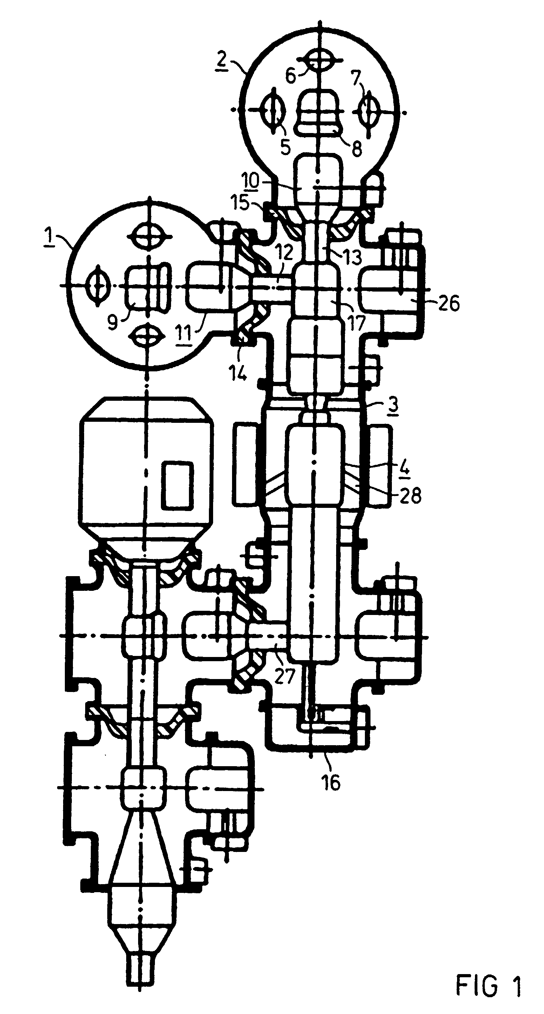

Dabei zeigt
Figur 1 schematisch zwei Sammelschienen und ein Kapselungsgehäuse mit einem Leistungsschalter,

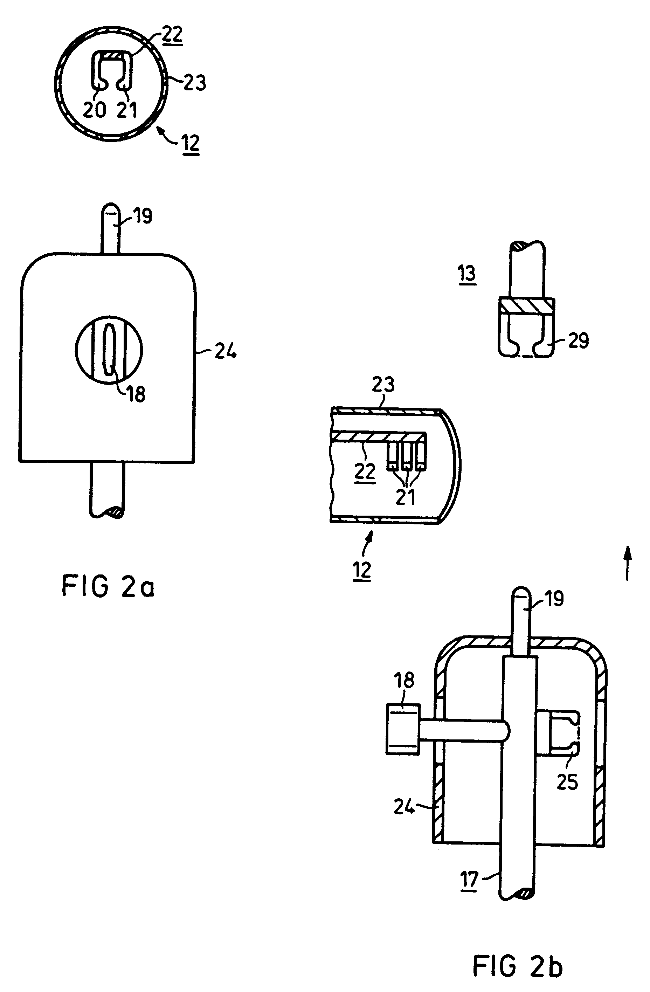

Figur 2a und Figur 2b zeigen das Kontaktstück mit den Kontakteinrichtungen in zwei verschiedenen Ansichten in schematischer Form.

Zwei Sammelschienen 1, 2 verlaufen parallel zueinander und sind an ein Kapselungsgehäuse 3 eines Leistungsschalters 4 angeschlossen. Jede der Sammelschienen 1, 2 enthält jeweils drei Sammelschienenleiter 5, 6, 7, von denen eine mit einem feststehenden Kontaktstück 8, 9 eines Trennschalters 10, 11 verbunden ist. Die Trennschalter sind jeweils im Gasraum der Sammelschiene 1, 2 angeordnet. Die Anschlüsse 12, 13 der Trennschalter 10, 11 durchsetzen gasdicht jeweils einen Schottisolator 14, 15, an dem der jeweilige Trennschalter 10, 11 befestigt ist.

In dem Kapselungsgehäuse 3 befindet sich der Leistungsschalter 4 und ist in dieses in axialer Richtung von dem Ende 16 des Kapselungsgehäuses 3 her einschiebbar. Mit dem Leistungsschalter 4 ist das Kontaktstück 17 fest verbunden, das seinerseits Kontakteinrichtungen 18, 19 zur Verbindung mit den Anschlüssen 12, 13 der Trennschalter trägt. Eine der Kontakteinrichtungen 18 ist als Messerkontakt ausgebildet, der mit den Kontaktfingern 20, 21 eines gabelförmigen Gegenkontaktstücks 22 des Anschlusses 12 zusammenwirkt. Das Gegenkontaktstück 22 ist durch eine metallische Abschirmung 23 abgeschirmt.

Der Kontaktstift 19 ist ebenfalls durch das Kontaktstück 17 getragen und wirkt mit einem tulpenförmigen Gegenkontaktstück 29 zusammen, das mit dem Anschluß 13 des Trennschalters 10 verbunden und ebenfalls von einer Abschirmung umgeben ist.

Das Kontaktstück 17 selbst weist ebenfalls eine Abschirmung 24 zur Feldvergleichmäßigung auf.

Mit dem Kontaktstück 17 ist außerdem ein Tulpenkontakt 25 verbunden, der einen nicht dargestellten Kontaktstift des Erdungsschalters 26 im Erdungsfall aufnimmt.

Beim Einfahren des Leistungsschalters 4 in das Kapselungsgehäuse 3 wird der Messerkontakt 18 mit dem gabelförmigen Kontaktstück 22 und das stiftförmige Kontaktstück 19 mit dem entsprechenden Gegenkontakt in Eingriff gebracht und somit die elektrische Verbindung zwischen dem einen Ende des Leistungsschalters 4 und den beiden Trennschaltern 10, 11 hergestellt.

Es sind somit keine weiteren Montagearbeiten innerhalb des Kapselungsgehäuses 3 notwendig. Es werden vielmehr die beiden Trennschalter 10, 11 zusammen mit den Schottisolatoren 14, 15 von den Flanschöffnungen her montiert und danach wird der Leistungsschalter 4 von der anderen Seite her eingeschoben. Die Verbindungen innerhalb des Kapselungsgehäuses 3 werden einfach mittels der beschriebenen Steckkontakte hergestellt. Entsprechend einfach geht auch die Demontage vor sich.

Die beschriebene Hochspannungsschaltanlage stellt somit eine platzsparende und in bezug auf die Montage sehr wenig aufwendige Konstruktion dar.

Der Leistungsschalter 4 kann aus Stabilitätsgründen zwischen dem Kontaktstück 17 und dem Anschluß 27 eines weiteren Trennschalters durch einen zusätzlichen Isolator 28 abgestützt sein. Dieser Isolator kann beispielsweise aus mehreren verteilten säulenförmigen Stützern bestehen.

## Patentansprüche

1. Metallgekapselte elektrische Hochspannungsschaltanlage mit zwei Sammelschienen (1, 2) und einem Leistungsschalter (4), mit dessen erstem Ende die Anschlüsse (12, 13) zweier Trennschalter (10, 11) verbunden sind, von denen je einer im Einschaltzustand den Leistungsschalter (4) mit je einem Sammelschienenleiter (5, 6, 7) verbindet und mit einem Kapselungsgehäuse (3) für den Leistungsschalter (4), in dem die Anschlüsse (12, 13) der Trennschalter (10, 11) getrennt voneinander angeordnet sind, wobei mit dem ersten Ende des Leistungsschalters (4) ein Kontaktstück (17) fest verbunden ist, welches zusammen mit dem Leistungsschalter (4) dem Kapselungsgehäuse (3) entnehmbar ist und mindestens zwei Kontakteinrichtungen (18, 19) zur elektrischen Verbindung des Leistungsschalters (4) mit je einem der Trennschalter (10, 11) aufweist, wobei die Kontakteinrichtungen (18, 19) zusammen mit den Anschlüssen der Trennschalter (10, 11) innerhalb des Kapselungsgehäuses (3) Steckverbindungen bilden
**dadurch gekennzeichnet,** daß
die Steckverbindungen trennschalterseitig unbewegliche Kontaktstücke (22, 29) aufweisen, in die bei der Montage durch axiales Einbringen des Leistungsschalters (4) in das Kapselungsgehäuse (3) entsprechende Gegenkontaktstücke (18, 19) in axialer Richtung einschiebbar sind.

2. Metallgekapselte elektrische Hochspannungsschaltanlage nach Anspruch 1,
**dadurch gekennzeichnet,** daß
das Kontaktstück (17) eine weitere Kontakteinrichtung (25) aufweist, mit der ein in dem Kapselungsgehäuse (3) angeordneter Erdungsschalter in der Erdungsstellung (26) zusammenwirkt.

3. Metallgekapselte elektrische Hochspannungsschaltanlage nach Anspruch 1 oder 2,
**dadurch gekennzeichnet,** daß
das Kapselungsgehäuse (3) wenigstens teilweise zylindrisch ausgebildet ist, daß ein erster Trennschalter (10) in der Längsachse des Kapselungsgehäuses (3) an dessen einem Ende angeordnet ist und daß ein zweiter Trennschalter (11) an demselben Ende des Kapselungsgehäuses (3) mantelseitig angeordnet ist.

## Claims

1. Metal-clad electrical high-voltage switchgear having two busbars (1, 2) and a circuit-breaker (4), to the first end of which are connected the terminals (12, 13) of two disconnecting switches (10, 11), each of which, in the closed circuit state, connects the circuit-breaker (4) to a respective busbar conductor (5, 6, 7), and having an enclosure housing (3) for the circuit-breaker (4), in which housing the terminals (12, 13) of the disconnecting switches (10, 11) are arranged separately from each other, with there being securely connected to the first end of the circuit-breaker (4) a contact piece (17), which can be removed from the enclosure housing (3) together with the circuit-breaker (4) and has at least two contact devices (18, 19) for electrically connecting the circuit-breaker (4) to one of the disconnecting switches (10, 11) in each case, with the contact devices (18, 19) forming plug-in connections together with the terminals of the disconnecting switches (10, 11) inside the enclosure housing (3), characterised in that on the disconnecting-switch-side, the plug-in connections have stationary contact pieces (22, 29) into which, during the assembly by axial insertion of the circuit-breaker (4) into the enclosure housing (3), corresponding counter-contact pieces (18, 19) can be pushed in the axial direction.

2. Metal-clad electrical high-voltage switchgear according to claim 1, characterised in that the contact piece (17) has a further contact device (25), with which an earthing switch arranged in the enclosure housing (3) cooperates in the earthing position (26).

3. Metal-clad electrical high-voltage switchgear according to claim 1 or 2, characterised in that the enclosure housing (3) is at least partially cylindrical in construction, in that arranged in the longitudinal axis of the enclosure housing (3), at the one end thereof, is a first disconnecting switch (10), and in that arranged at the same end of the enclosure housing (3), on the cladding side, is a second disconnecting switch (11).

## Revendications

1. Installation électrique de distribution haute tension à blindage métallique, comportant deux barres omnibus (1, 2) et un commutateur de puissance (4) à la première extrémité duquel sont reliées les bornes (12, 13) de deux sectionneurs (10, 11) dont l'un, dans l'état de fonctionnement, relie le commutateur de puissance (4) à un conducteur de barre omnibus (5, 6, 7), et comportant un boîtier de blindage (3) pour le commutateur de puissance (4) dans lequel les bornes (12, 13) des sectionneurs (10, 11) sont disposées séparément les unes des autres, une pièce de contact (17) étant reliée de manière fixe à la première extrémité du commutateur de puissance (4), laquelle pièce de contact peut être enlevée avec le commutateur de puissance (4) du boîtier de blindage (3) et comporte au moins deux dispositifs de contact (18, 19) destinés à la connexion électrique du commutateur de puissance (4) avec un des sectionneurs (10, 11), les dispositifs de contact (18, 19) formant avec les bornes des sectionneurs (10, 11) des liaisons par enfichage à l'intérieur du boîtier de blindage (3), caractérisée en ce que les connexions par enfichage comportent côté sectionneurs des pièces de contact (22, 29) fixes dans lesquelles des pièces de contact conjuguées (18, 19) peuvent être introduites dans la direction axiale lors du montage par mise en place axiale du commutateur de puissance (4) dans le boîtier de blindage (3).

2. Installation électrique de distribution haute tension à blindage métallique selon la revendication 1, caractérisée en ce que la pièce de contact (17) comporte un dispositif de contact (25) supplémentaire avec lequel coopère dans la position de mise à la terre (26) un interrupteur de mise à la terre disposé dans le boîtier de blindage (3).

3. Installation électrique de distribution haute tension à blindage métallique selon la revendication 1 ou 2, caractérisée en ce que le boîtier de blindage (3) est au moins en partie cylindrique, qu'un premier sectionneur (10) est disposé dans l'axe longitudinal du boîtier de blindage (3) à l'une des extrémités de celui-ci et qu'un deuxième sectionneur (11) est disposé à la même extrémité du boîtier de blindage (3) sur le côté.
